# EUROPÄISCHE PATENTSCHRIFT

(11) **EP 3 909 407 B1**
(45) Veröffentlichungstag und Bekanntmachung des Hinweises auf die Patenterteilung: **13.12.2023**
(21) Anmeldenummer: 21166532.8
(22) Anmeldetag: 01.04.2021
(51) Int. Cl.: A01B 59/042, A01B 63/16

(54) **GEZOGENE LANDWIRTSCHAFTLICHE ARBEITSMASCHINE UND VERFAHREN ZUM BEEINFLUSSEN EINER ABSTÜTZKRAFT EINER GEZOGENEN LANDWIRTSCHAFTLICHEN ARBEITSMASCHINE**
TOWED AGRICULTURAL WORKING MACHINE AND METHOD FOR INFLUENCING THE SUPPORTING FORCE OF A TOWED AGRICULTURAL WORKING MACHINE
MACHINE AGRICOLE TRACTÉE ET PROCÉDÉ POUR INFLUENCER UNE FORCE D'APPUI D'UNE MACHINE AGRICOLE TRACTÉE

(30) Priorität: 13.05.2020 DE 102020112927
(43) Veröffentlichungstag der Anmeldung: 17.11.2021
(73) Patentinhaber: Horsch Maschinen GmbH, 92421 Schwandorf (DE)
(72) Erfinder: Horsch, Philipp, 92421 Schwandorf (DE)
(74) Vertreter: v. Bezold & Partner Patentanwälte - PartG mbB

(56) Entgegenhaltungen:
- EP-A1- 3 420 788
- DE-A1-102018 208 852
- DE-U1-202019 100 365
- US-A1- 2020 053 943

## Beschreibung

Die Erfindung betrifft eine gezogene landwirtschaftliche Arbeitsmaschine, vorzugsweise eine Bodenbearbeitungs- und/oder Sämaschine. Die Erfindung betrifft zudem ein Verfahren zum Anpassen einer Abstützkraft einer gezogenen landwirtschaftlichen Arbeitsmaschine.

DE 10 2018 208852 A1 offenbart ein landwirtschaftliches Gerät, das einen Rahmen mit einem Mittelabschnitt (aufweist, und das mittels eines Anbringungsbereichs des Rahmens mit einem Schlepper verbindbar ist, ferner umfassend ein erstes Stützrad, das mit einem ersten Abstützmechanismus relativ zum Rahmen abgestützt ist, und ein zweites Stützrad, das mit einem zweiten Abstützmechanismus relativ zum Rahmen abgestützt ist, wobei der erste und zweite Abstützmechanismus miteinander gekoppelt sind und mit einem Energiespeicher in Verbindung stehen, sodass das erste Stützrad und das zweite Stützrad kraftgeführt in Übereinstimmung relativ zum Rahmen ausstellbar sind. Zum allgemeinen Stand der Technik kann auch noch auf die DE 20 019 100365 U1, die EP 3 420 788 A1 und die US 2020/053943 A1 verwiesen werden.

Eine gezogene landwirtschaftliche Arbeitsmaschine wurde durch die DE 10 2017 120 948 A1 bereits bekannt. Beschrieben ist eine, eine große Arbeitsbreite aufweisende landwirtschaftliche Arbeitsmaschine, mit einem eine Zugdeichsel aufweisenden Zentralrahmen und einem Fahrgestell. Zur Erreichung einer für den Straßentransport zulässigen Transportbreite können Arbeitswerkzeuge in eine Position oberhalb des Fahrgestells und des Zentralrahmen verschwenkt werden. Nachteilig hierbei ist jedoch, dass durch eine derartige Verschwenkung die auf die Zugdeichsel wirkenden Abstützkräfte (z.B. Stützlasten) sehr groß werden können und mitunter maximal zulässige Abstützkräfte für eine die Arbeitsmaschine ziehende Zugmaschine überschritten werden und somit derartige Arbeitsmaschinen nicht auf öffentlichen Straßen bewegt werden dürfen.

Eine weitere gezogene landwirtschaftliche Arbeitsmaschine wurde durch die DE 10 2006 061 307 A1 offenbart. Um eine landwirtschaftliche Arbeitsmaschine zu schaffen, die eine verbesserte Wendigkeit, mit größerem Gesamtgewicht im Hinblick auf die zulässige Stützlast, d.h. die zulässige Abstützkraft aufweist, ist ein zusätzliches Anhängesystem zwischen der Arbeitsmaschine und einer Zugmaschine vorgesehen. Ein derartiges zusätzliches Anhängesystem hat sich jedoch in der Praxis als nicht praktikabel herausgestellt, da dieses zum einen sehr kostenintensiv ist und zum anderen, da die für den Betrieb der Arbeitsmaschine benötigten hydraulischen, pneumatischen und elektrischen Verbindungsleitungen durch die zusätzliche Verbindungsstelle häufig beschädigt werden. Auch eine Straßenzulassung ist für derartige Anhängesysteme nicht ohne weiteres zu erhalten.

Aufgabe der Erfindung ist es somit, eine große gezogene landwirtschaftliche Arbeitsmaschine mit einer reduzierten Abstützkraft bei einem einfachen Aufbau zu schaffen.

Diese Aufgaben werden gelöst durch eine gezogene landwirtschaftliche Arbeitsmaschine mit den Merkmalen des unabhängigen Anspruch 1, sowie durch ein Verfahren zum Beeinflussen einer Abstützkraft mit dem Merkmalen des Verfahrensanspruch 23. Vorteilhafte Ausführungsformen und Weiterbildungen der Erfindung sind in den Ansprüchen und der folgenden Beschreibung unter teilweiser Bezugnahme auf die Figuren offenbart.

Die Erfindung betrifft eine gezogene landwirtschaftliche Arbeitsmaschine, vorzugsweise Bodenbearbeitungs- und/oder Sämaschine.

Die Arbeitsmaschine umfasst einen eine Zugdeichsel aufweisenden Zentralrahmen, welchem Zentralrahmen vorzugsweise im hinteren Bereich ein Fahrgestell (z.B. Laufwerk, Achse) mit sich auf dem Boden abstützenden und drehenden Laufrädern zugeordnet ist und welche Zugdeichsel dazu eingerichtet ist, dass die Arbeitsmaschine durch eine Abstützkraft in abstützender Weise mit einer Zugmaschine verbindbar ist, wobei im Bereich der Zugdeichsel oder vorzugsweise im vorderen Bereich des Zentralrahmen ein Zusatzfahrwerk angeordnet ist.

Um eine große gezogene landwirtschaftliche Arbeitsmaschine mit einer reduzierten Abstützkraft bei einem einfachen Aufbau zu schaffen ist erfindungsgemäß vorgesehen, dass das Zusatzfahrwerk federnd und/oder höhenverstellbar gegenüber der Zugdeichsel und/oder dem Zentralrahmen gelagert ist und dazu eingerichtet ist, eine Abstützkraft zu beeinflussen.

In Folge der erfindungsgemäßen Maßnahmen wird eine gezogene landwirtschaftliche Arbeitsmaschine geschaffen, insbesondere eine große gezogene landwirtschaftliche Arbeitsmaschine, bei welcher mittels eines Zusatzfahrwerk die Abstützkraft derartig beeinflusst, insbesondere reduziert werden kann, dass eine für eine Straßenfahrt zulässige maximale Abstützkraft und eine daraus resultierende Achslast einer Zugmaschine (z.B. landwirtschaftlicher Traktor) eingehalten werden kann und somit eine Fahrt auf öffentlichen Straßen jederzeit möglich ist.

Erfindungsgemäß kann eine Beeinflussung der Abstützkraft insbesondere ein Erhöhen (z.B. zur Erhöhung der Traktion der Zugmaschine), ein Verringern (z.B. zur Verringerung der Achslast der Zugmaschine) und/oder ein im Wesentlichen Konstant halten der Abstützkraft umfassen. Wobei die Art der Beeinflussung vorzugsweise zweckmäßig in Abhängigkeit der Fahrsituation (z.B. Straßenfahrt oder Feldfahrt) erfolgen kann und/oder in Abhängigkeit einer Gewichtskraft (z.B. Gewicht der Arbeitsmaschine und/oder Vorratsbehälter voll / leer und/oder Anzahl der Arbeitswerkzeuge) der Arbeitsmaschine erfolgen kann.

Es ist möglich, dass die Beeinflussung in Abhängigkeit der Fahrsituation unterschiedlich erfolgt, dass das bspw. in einer Feldfahrt (z.B. Arbeitsposition der Arbeitsmaschine) ein Erhöhen der Abstützkraft erfolgt und bei einer Straßenfahrt ein Verringern der Abstützkraft erfolgt.

Um ein einfach und kompakt bauendes Zusatzfahrwerk zu erreichen, insbesondere um ein Rad und/oder Räder für das Zusatzfahrwerk verwenden zu können welche kleine Durchmesser aufweisen und keine großen Anforderungen auf deren Tragfähigkeit erfordern ist es möglich, dass das Zusatzfahrwerk mittels einer Federeinrichtung federnd und/oder höhenverstellbar gegenüber der Zugdeichsel und/oder dem Zentralrahmen gelagert ist, wobei die Federeinrichtung dazu eingerichtet ist, zur Beeinflussung der Abstützkraft eine definierte und/oder definierbare Vorspannkraft zu erzeugen.

Es ist zweckmäßig möglich, dass die jeweilige Vorspannkraft der Federeinrichtung an eine Tragfähigkeit des Rades und/oder der Räder des Zusatzfahrwerk angepasst wird, insbesondere derartig, dass die Tragfähigkeit nicht überschritten wird.

Die Abstützkraft kann insbesondere durch eine Stützlast der gezogenen landwirtschaftlichen Arbeitsmaschine definiert sein, d.h. die Abstützkraft ist umso größer, umso größer die Stützlast ist, wobei ein erfindungsgemäßes Beeinflussen der Abstützkraft insbesondere ein Beeinflussen der Stützlast umfasst. Das heißt die Arbeitsmaschine weist ein, eine Gewichtskraft definierendes Gesamtgewicht auf. Dieses Gesamtgewicht wir anteilig vom Fahrgestell aufgenommen, wodurch eine Fahrgestellkraft resultiert und anteilig von der Zugdeichsel aufgenommen, wodurch eine Abstützkraft resultiert. Die jeweilige Größe der Abstützkraft und der Fahrgestellkraft ist abhängig von der Fahrzeuggeometrie (z.B. der Lage des Schwerpunktes der Arbeitsmaschine, insbesondere bei einer Transportposition). Zur Beeinflussung der Abstützkraft ist erfindungsgemäß ein Zusatzfahrwerk vorgesehen, welches dazu eingerichtet ist, anteilig eine Gewichtskraft aufzunehmen, wodurch eine Zusatzfahrwerkskraft resultiert und wodurch entsprechend insbesondere die Abstützkraft beeinflusst werden kann, wobei gelten kann, je größer die Vorspannkraft einer Federeinrichtung desto geringer die Abstützkraft. Erfindungsgemäß ist das Zusatzfahrwerk somit insbesondere dazu eingerichtet anteilig eine Gewichtskraft, in Form einer Zusatzfahrwerkskraft aufzunehmen, wobei anhand der Größe der Zusatzfahrwerkskraft wiederum die Abstützkraft sich ändert.

Es sei darauf hingewiesen, dass wenn in vorliegender Beschreibung Kräfte (z.B. Abstützkraft, Gewichtskraft) definiert sind, damit gleichsam auch Gewichte (z.B. Stützlast, Gesamtgewicht) umfasst und beinhaltet sind.

Es kann vorgesehen sein, dass das Zusatzfahrwerk in die Zugdeichsel und/oder den Zentralrahmen derartig integriert ist, dass sich die Länge und/oder die Breite der Arbeitsmaschine nicht verändern, zweckmäßig insbesondere derartig integriert sind, dass eine Länge der Arbeitsmaschine sich nicht erhöht und/oder eine Breite der Arbeitsmaschine sich nicht erhöht.

Es kann vorgesehen sein, dass die Größer der Vorspannkraft der Federeinrichtung anhand einer durch die Abstützung der Arbeitsmaschine an einer Zugmaschine hervorgerufenen Abstützkraft definiert und/oder definierbar ist, vorzugsweise derartig, dass eine erforderliche Abstützkraft nicht überschritten und/oder unterschritten wird. D.h. ist an einer Zugmaschine bspw. nur eine geringe Abstützkraft (z.B. Stützlast) zulässig, kann erfindungsgemäß vorgesehen sein, dass die Vorspannkraft derartig definiert wird, dass diese Abstützkraft nicht überschritten wird, somit kann wiederum anhand der Vorspannkraft der Federeinrichtung die Zusatzfahrwerkskraft definiert werden.

Gemäß einer weiteren Ausführungsvariante der Erfindung ist es möglich, dass diese eine Mehrzahl von Arbeitswerkzeugen und/oder zumindest einen Vorratsbehälter aufweist, welche in einer Transportposition oberhalb und/oder seitlich des Zusatzfahrwerk angeordnet sind, wobei die Vorspannkraft der Federeinrichtung anhand einer Anzahl an Arbeitswerkzeugen und/oder anhand einer Beladung (z.B. Füllstand und/oder Gewicht) des zumindest einen Vorratsbehälters definiert und/oder definierbar ist.

Um eine verbesserte Beeinflussung der Abstützkraft zu erreichen, ist es gemäß einer Weiterbildung der Erfindung möglich, dass die Vorspannkraft der Federeinrichtung anhand einer mittels einer Erfassungseinrichtung ermittelten Abstützkraft definiert und/oder definierbar ist.

Die Erfassungseinrichtung kann zumindest eine Messeinrichtung (z.B. Kraftsensor, Dehnungsmessstreifen und/oder dergl.) aufweisen und/oder umfassen.

Die Erfassungseinrichtung ist insbesondere dazu eingerichtet, eine Abstützkraft mittelbar oder unmittelbar zu ermitteln. D.h. die Erfassungseinrichtung kann bspw. dazu eingerichtet sein, direkt (unmittelbar) an (z.B. im Bereich) der Zugdeichsel eine vorhandene Abstützkraft zu ermitteln, alternativ oder ergänzend kann die Erfassungseinrichtung dazu eingerichtet sein, anhand bspw. eines erfassten Gesamtgewichts der Arbeitsmaschine und/oder eines Gewichts des Vorratsbehälters eine Abstützkraft zu ermitteln (mittelbar). Wobei eine mittelbare Ermittlung hierbei auch ein entsprechendes Berechnungsprogramm mit umfassen kann, welches dazu eingerichtet ist, anhand der ermittelten Gewichte und Anhand der Fahrzeuggeometrie die Abstützkraft zu ermitteln (z.B. zu berechnen).

In einer weiteren bevorzugten Ausführungsform der Erfindung ist es möglich, dass ein Verhältnis der Vorspannkraft der Federeinrichtung zur Abstützkraft definiert werden kann, welches Verhältnis bspw. 1:2 oder 1:3 sein kann und insbesondere derartig ist, dass eine maximal zulässige Abstützkraft an einer Zugmaschine nicht überschritten wird, wobei somit insbesondere ein Einstellung der Vorspannkraft vereinfacht werden kann.

In einer alternativen oder ergänzenden Ausführungsform der Erfindung kann vorgesehen sein, dass das Zusatzfahrwerk mittels einer Federeinrichtung federnd und/oder höhenverstellbar gegenüber der Zugdeichsel und/oder dem Zentralrahmen gelagert ist, wobei die Federeinrichtung durch eine oder mehrere elastisch verformbare Federn gebildet wird (z.B. Schraubendruckfeder, Schraubenzugfeder, Tellerfeder, Elastomerlager und/oder dergl.).

In einer alternativen oder ergänzenden Ausführungsform der Erfindung kann vorgesehen sein, dass das Zusatzfahrwerk mittels einer Federeinrichtung federnd und/oder höhenverstellbar gegenüber der Zugdeichsel und/oder dem Zentralrahmen gelagert ist, wobei die Federeinrichtung durch einen oder mehrere Fluidzylinder (z.B. einfachwirkender oder doppeltwirkender pneumatisch und/oder hydraulisch betätigter Linearantrieb, Zylinder und/oder dergl.) gebildet wird.

In einer alternativen oder ergänzenden Ausführungsform der Erfindung kann vorgesehen sein, dass der Fluidzylinder zur Beeinflussung der Abstützkraft, insbesondere zur Beeinflussung der Vorspannkraft der Federeinrichtung, mit verschiedenen Volumenströmen und/oder Fluiddrücken beaufschlagbar ist (z.B. im Betrieb beaufschlagt wird), insbesondere mittels einer Steuereinrichtung mit verschiedenen Volumenströmen und/oder Fluiddrücken beaufschlagbar ist. Wobei es zudem möglich ist, dass die Steuereinrichtung wirktechnisch mit der Erfassungseinrichtung gekoppelt ist.

Die Federeinrichtung kann insbesondere eine Überlastsicherung für das Rad (z.B. Stützrad) und/oder die Räder (z.B. Stützräder) des Zusatzfahrwerk bilden, so dass deren Tragfähigkeit nicht überschritten wird, wobei dies bspw. durch die Bauweise und Ausführungsform der Feder erreicht werden kann oder durch einen Fluidkreislauf des Fluidzylinder erreicht werden kann, bspw. mittels eines Druckspeicher, Druckregelventilen, Druckbegrenzungsventilen und/oder dergl. Die Überlastsicherung kann hierbei derartig ausgeführt sein, dass diese auf eine Vorspannkraft abgestimmt ist.

Das Zusatzfahrwerk kann durch ein Stützrad oder durch mehrere Stützräder gebildet werden. Insofern das Zusatzfahrwerk durch mehrere Stützräder gebildet wird, können diese eine gemeinsame Achse aufweisen.

Es ist möglich, dass das Zusatzfahrwerk und/oder das eine Stützrad oder die mehreren Stützräder mittels zumindest einer aufrecht orientierten Schwenkachse (z.B. Drehachse, Lenkachse und/oder dergl.) schwenkbar, insbesondere lenkbar, gegenüber der Zugdeichsel oder dem Zentralrahmen gelagert sind. Wobei das Stützrad oder die Stützräder hierbei auch sog. Schwenkräder sein können oder zwangsgelenkt sein können.

In einer alternativen oder ergänzenden Ausführungsform der Erfindung kann vorgesehen sein, dass die Laufräder und/oder das eine Stützrad oder die mehreren Stützräder durch Räder und/oder durch Raupenfahrwerke gebildet sind.

Gemäß einer Weiterbildung der Erfindung kann vorgesehen sein, dass das Zusatzfahrwerk mittels einer Federeinrichtung federnd und/oder höhenverstellbar gegenüber der Zugdeichsel und/oder dem Zentralrahmen gelagert ist, und das Zusatzfahrwerk, vorzugsweise das eine Stützrad oder die mehreren Stützräder welche das Zusatzfahrwerk bilden, mittels der Federeinrichtung in eine sich nicht mit einer Bodenfläche in Kontakt befindende Position verschwenkbar ist, insbesondere derartig, dass keine Beeinflussung der Abstützkraft mittels des Zusatzfahrwerk erfolgt. Das heißt, dass Zusatzfahrwerk kann derartig ausgehoben werden, dass mit diesem insbesondere keine Beeinflussung der Abstützkraft mittels des Zusatzfahrwerk erfolgt, wobei dies insbesondere bei einer Feldfahrt, d.h. in einer Arbeitsposition der Arbeitsmaschine erfolgen kann.

Um eine Anpassung des Zusatzfahrwerk an eine Höhenlage einer Zugmaschine zu ermöglichen, ist es gemäß einer Weiterbildung der Erfindung möglich, dass die Höhenlage des Zugfahrzeug und/oder der Zugdeichsel veränderbar ist, wobei eine Vorspannkraft der Federeinrichtung an die jeweilige Höhenlage anpassbar ist. Somit kann erreicht werden, dass unabhängig von einer Höhenlage des Zusatzfahrwerk immer eine gewünschte Beeinflussung der Abstützkraft möglich ist.

Um eine verbesserte Beeinflussung der Abstützkraft mittels des Zusatzfahrwerk zu erreichen, kann gemäß einer alternativen oder ergänzenden Ausführungsvariante vorgesehen sein, dass das

Zusatzfahrwerk an verschiedenen Positionen der Zugdeichsel und/oder des Zentralrahmen montiert werden kann. Wobei diese Montage bspw. derartig erfolgen kann, um entsprechende Abstandsverhältnisse zu erreichen. Bspw. Abstandsverhältnis Zugdeichsel zu Zusatzfahrwerk und Zusatzfahrwerk zu Fahrgestell mindestens 1:2 oder mindestens 1:3 oder mindestens 1:4 oder mindestens 1:5.

Es sei darauf hingewiesen, dass die gezogene landwirtschaftliche Arbeitsmaschine eine Bodenbearbeitungsmaschine und/oder eine Sämaschine sein kann, welcher Arbeitswerkzeuge, Säschare oder dergl. zugeordnet sein können und/oder mit dieser gekoppelt sein können, vorzugsweise mittelbar und/oder unmittelbar mit dem Zentralrahmen gekoppelt sein können. Die gezogene landwirtschaftliche Arbeitsmaschine könnte jedoch auch eine gezogene Feldspritze sein, oder ein Vorratsbehälter, z.B. Saattank oder dergl. sein. Auch andere Arten von gezogenen landwirtschaftlichen Arbeitsmaschinen wären denkbar, welche jedoch jeweils mittels einer Zugmaschine gezogen werden können und für den landwirtschaftlichen Einsatz geeignet sind.

Es ist möglich, dass die Zugdeichsel höhenverstellbar und/oder lenkbar gegenüber dem Zentralrahmen am Zentralrahmen gelagert ist, wobei Erfindungsgemäß bei einer derartigen Ausführungsvariante wiederum eine entsprechende Vorspannkraft der Federeinrichtung an die jeweilige Höhenlage der Zugdeichsel anpassbar ist.

Die Zugdeichsel kann zur abstützenden Verbindung mit einer Zugmaschine eine Anhängekupplung aufweisen und/oder umfassen. Die Anhängekupplung kann bspw. eine sog. Zugöse, eine Kugelkopfkupplung, eine Unterlenkerwelle und/oder dergl. sein.

Im Kontext der Erfindung umfasst die Definition vorzugsweise im hinteren Bereich insbesondere einen Bereich des Zentralrahmen welcher sich gegenüber der Fahrtrichtung hinter dem Schwerpunkt der Arbeitsmaschine und/oder dem Zentralrahmen befinden kann, dementsprechend umfasst die Definition vorzugsweise im vorderen Bereich einen Bereich des Zentralrahmen welcher sich gegenüber der Fahrtrichtung vor dem Schwerpunkt der Arbeitsmaschine und/oder dem Zentralrahmen befinden kann. Wobei zudem darauf hingewiesen sei, dass der Schwerpunkt sich verändern kann und insbesondere bei einer Transportposition und einer Arbeitsposition unterschiedlich sein kann.

Es ist denkbar, dass das Fahrgestell und/oder das Zusatzfahrwerk eine Achse oder mehrere Achsen mit Laufrädern und/oder Stützrädern aufweisen. Wobei die mehreren Achsen zudem ein Tandem ausbilden können.

Es ist möglich, dass der Zugdeichsel und/oder dem Zentralrahmen zwei oder mehr Zusatzfahrwerke wie hierin beschrieben zugeordnet sind. Insbesondere kann auch ein Zusatzfahrwerk im Bereich des Fahrgestells angeordnet sein um somit eine Fahrgestellkraft zu verringern. Es wäre auch denkbar das nur ein Zusatzfahrwerk im Bereich des Fahrgestell angeordnet ist.

Es ist möglich, dass das Zusatzfahrwerk und die Arbeitswerkzeuge der Arbeitsmaschine an unterschiedlichen Rahmen montiert sind, bspw. das Zusatzfahrwerk am Zentralrahmen und die Arbeitswerkzeuge an einem entsprechenden Werkzeugrahmen.

Das Zusatzfahrwerk ist ein sich zur Lastabtragung der Arbeitsmaschine mit den Laufrädern gemeinsam, insbesondere gleichzeitig auf dem Boden abstützendes Zusatzfahrwerk. Dadurch kann z. B. ermöglicht werden, dass das Zusatzfahrwerk und die Laufräder vorzugsweise gleichzeitig zur Lastabtragung der Arbeitsmaschine beitragen, z. B. in Feld- und/oder Straßenfahrt der Arbeitsmaschine.

Die Laufräder und/oder das Zusatzfahrwerk können sich z. B. in Feldfahrt und/oder Straßenfahrt zur Lastabtragung der Arbeitsmaschine auf dem Boden abstützen.

Es ist möglich, dass das Zusatzfahrwerk nicht über das Fahrgestell und/oder die Laufräder nach seitlich außen hinausragt, so dass z. B. das eine Stützrad oder die mehreren Stützräder oder das oder die Raupenfahrwerke nicht seitlich außerhalb des Fahrgestells und/oder nicht seitlich außerhalb der Laufräder angeordnet ist.

Es ist möglich, dass das Fahrgestell (insbesondere dessen Laufräder) eine Spurbreite definiert, wobei das Zusatzfahrwerk vorzugsweise nicht über die Spurbreite des Fahrgestells nach seitlich außen hinausragt. Alternativ oder ergänzend kann z. B. das eine Stützrad oder die mehreren Stützräder oder das oder die Raupenfahrwerke insbesondere innerhalb der Spurbreite des Fahrgestells angeordnet sein.

Das Zusatzfahrwerk weist eine im Wesentlichen gleiche oder eine kleinere Längserstreckung (z. B. Gesamtbreite, insbesondere bei Bodenkontakt) auf als das Fahrgestell. Ergänzend kann z. B. die Längserstreckung (z. B. Gesamtbreite, insbesondere bei Bodenkontakt) des Zusatzfahrwerks und/oder die Längserstreckung (z. B. Gesamtbreite, insbesondere bei Bodenkontakt) des Fahrgestells vorzugsweise maximal 3 Meter betragen.

Es ist möglich, dass das Zusatzfahrwerk z. B. zwei Stützräder oder zwei Raupenfahrwerke aufweist, welche vorzugsweise jeweils mittels einer gemeinsamen Achskonstruktion verbunden sein können. Dabei kann z. B. die Achskonstruktion derartig federnd und/oder höhenverstellbar gegenüber der Zugdeichsel und/oder dem Zentralrahmen gelagert sein, dass die Stützräder oder die Raupenfahrwerke zumindest weitgehend synchrone, insbesondere identische Bewegungen ausführen können und/oder definiert asynchrone Bewegungen ausführen können.

Es ist möglich, dass das Zusatzfahrwerk, vorzugsweise das eine Stützrad oder die mehreren Stützräder, das Raupenfahrwerk oder die Raupenfahrwerke, derartig dimensioniert und ausgeführt ist, um wenigstens 1 Tonne, wenigstens 2 Tonnen oder wenigstens 3 Tonnen zu tragen.

Das Zusatzfahrwerk kann z. B. nur ein einziges Stützrad oder nur ein einziges Raupenfahrwerk vorzugsweise mit nur einer einzigen Raupe umfassen.

Die Arbeitsmaschine kann z. B. zumindest eine Schwingenarmkonstruktion zur Betätigung des Zusatzfahrwerks (z. B. Stützrad, Stützräder, Raupenfahrwerk oder Raupenfahrwerke) aufweisen.

Die zumindest eine Schwingenarmkonstruktion kann z. B. zur Vorderseite oder zur Rückseite der Arbeitsmaschine weisen und/oder mit einer Abweichung von z. B. +/- kleiner 90°, +/- kleiner 60° oder +/- kleiner 45° parallel zur Längserstreckung der Arbeitsmaschine und/oder des Zentralrahmens ausgerichtet sein.

Es ist möglich, dass das Zusatzfahrwerk (z. B. das Stützrad, die Stützräder, das Raupenfahrwerk oder di Raupenfahrwerke) von nur einer einzigen Schwingenarmkonstruktion betätigt wird.

Das eine einzige Stützrad kann z. B. eine Einzelbereifung oder eine Zwillings- oder Mehrfachbereifung aufweisen.

Das eine einzige Raupenfahrwerk kann z. B. eine Einzelraupe oder eine Zwillings- oder Mehrfachberaupung aufweisen.

Es sei noch darauf hingewiesen, dass die Begriffe "Steuern" und "Regeln" bzw. "Steuereinrichtung" und "Regelungseinrichtung" sich auf elektronische und/oder pneumatische und/oder hydraulische Steuerungen oder Regelungen oder Datenübertragungen beziehen können, die je nach Ausbildung Steuerungsaufgaben und/oder Regelungsaufgaben und/oder Datenübertragungen übernehmen können. Auch wenn hierin der Begriff "Steuern" verwendet wird, kann damit gleichsam zweckmäßig auch "Regeln" umfasst sein. Ebenso kann bei Verwendung des Begriffs "Regeln" gleichsam auch ein "Steuern" damit umfasst sein.

Zur Vermeidung von Wiederholungen sollen im Zusammenhang mit der gezogenen landwirtschaftlichen Arbeitsmaschine offenbarte Merkmale auch Verfahrensgemäß offenbart gelten und beanspruchbar sein. Die vorgenannten Aspekte und erfindungsgemäßen Merkmale und Ausführungsvarianten, insbesondere im Hinblick auf die gezogene landwirtschaftliche Arbeitsmaschine gelten somit auch für das Verfahren und sind in beliebiger Weise und Frei miteinander kombinierbar. In umgekehrter Weise gilt das gleiche, so dass auch alle Aspekte, erfindungsgemäße Merkmale und Ausführungsvarianten die im Zusammenhang mit der Verfahren offenbart sind, demnach auch für die gezogene landwirtschaftliche Arbeitsmaschine offenbart und entsprechend beanspruchbar sind.

Die Erfindung umfasst zur Lösung der Aufgaben zudem ein Verfahren zum Beeinflussen einer Abstützkraft einer gezogenen landwirtschaftlichen Arbeitsmaschine.

Das Verfahren umfasst gemäß einem ersten Schritt, ein Bereitstellen einer gezogenen landwirtschaftlichen Arbeitsmaschine wie hierin beschrieben, insbesondere nach einem der Ansprüche 1 bis 22**.**

Das Verfahren umfasst gemäß einem weiteren Schritt ein federndes und/oder höhenverstellbares Lagern eines Zusatzfahrwerk mittels einer Federeinrichtung mit einer definierten und/oder definierbaren Vorspannkraft.

Darüber hinaus umfasst das Verfahren ein Einstellen einer Vorspannkraft der Federeinrichtung derartig, dass eine Abstützkraft erhöht, verringert und/oder weitgehend konstant gehalten wird.

Die zuvor beschriebenen bevorzugten Ausführungsformen, Merkmale und Aspekte der Erfindung sind beliebig und frei miteinander kombinierbar.

Weitere Einzelheiten und Vorteile der Erfindung werden im Folgenden unter Bezug auf die beigefügten Zeichnungen beschrieben. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind. Es zeigen:
- Figur 1: eine Perspektivansicht einer Ausführungsvariante einer gezogenen landwirtschaftlichen Arbeitsmaschine mit einem Zusatzfahrwerk,
- Figur 2: eine Seitenansicht einer landwirtschaftlichen Arbeitsmaschine gemäß der Figur 1,
- Figur 3: eine Draufsicht einer landwirtschaftlichen Arbeitsmaschine gemäß der Figur 1, mit in Fahrtrichtung orientieren Stützräder des Zusatzfahrwerk,
- Figur 4A: eine schematische Seitenansicht einer landwirtschaftlichen Arbeitsmaschine welche in abstützender Weise mit einer Zugmaschine verbunden ist,
- Figur 4B: eine schematische Draufsicht einer gezogenen landwirtschaftlichen Arbeitsmaschine mit in Fahrtrichtung orientierten Stützräder des Zusatzfahrwerk,
- Figur 4C: eine schematische Draufsicht einer gezogenen landwirtschaftlichen Arbeitsmaschine mit einem eingelenkten Zusatzfahrwerk.

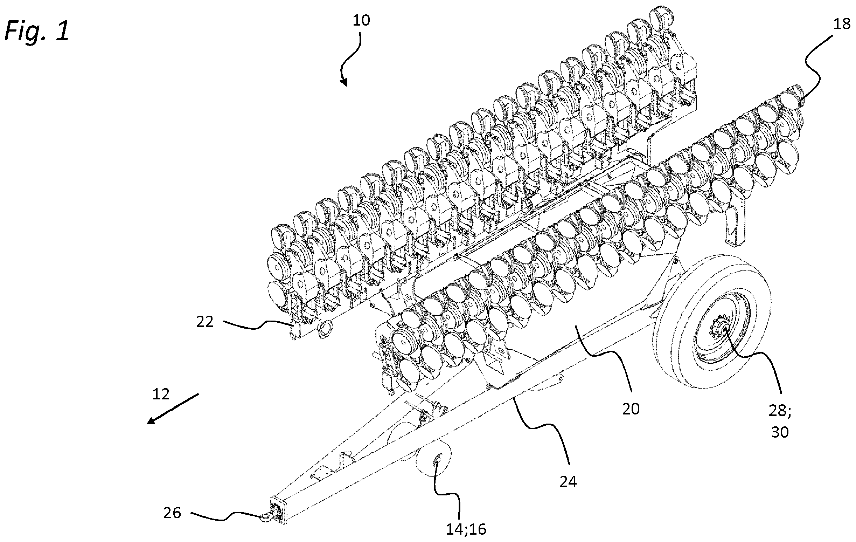

Die in den Figuren 1 bis 4 gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden. Die dargestellten Ausführungsformen stellen lediglich Beispiele dar, wie die erfindungsgemäße gezogene landwirtschaftliche Arbeitsmaschine und das erfindungsgemäße Verfahren ausgestaltet und ausgeführt sein können und stellen keine abschließende Begrenzung dar.

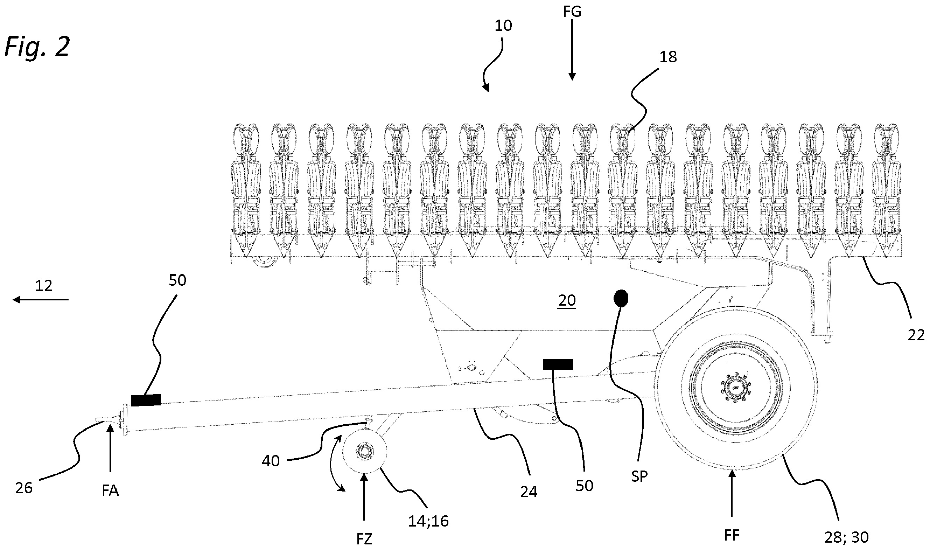

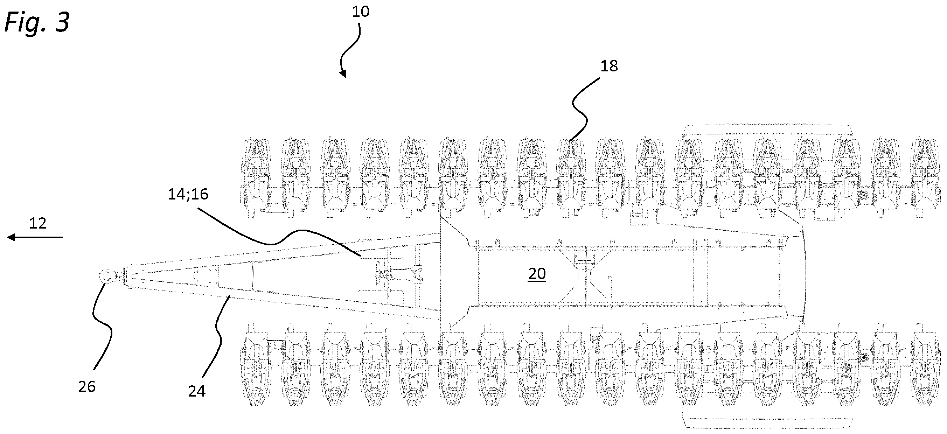

Eine Ausführungsvariante einer erfindungsgemäßen gezogenen landwirtschaftlichen Arbeitsmaschine 10 geht aus den Figuren 1 bis 3 hervor, wobei die Figur 1 die Arbeitsmaschine 10 in einer Perspektivansicht, die Figur 2 die Arbeitsmaschine 10 in einer Seitenansicht und die Figur 3 die Arbeitsmaschine 10 in einer Draufsicht zeigt.

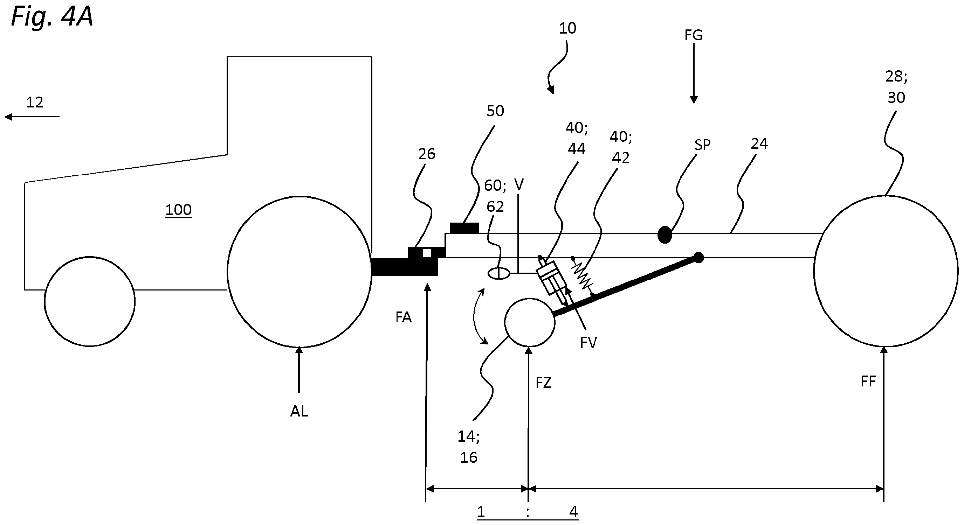

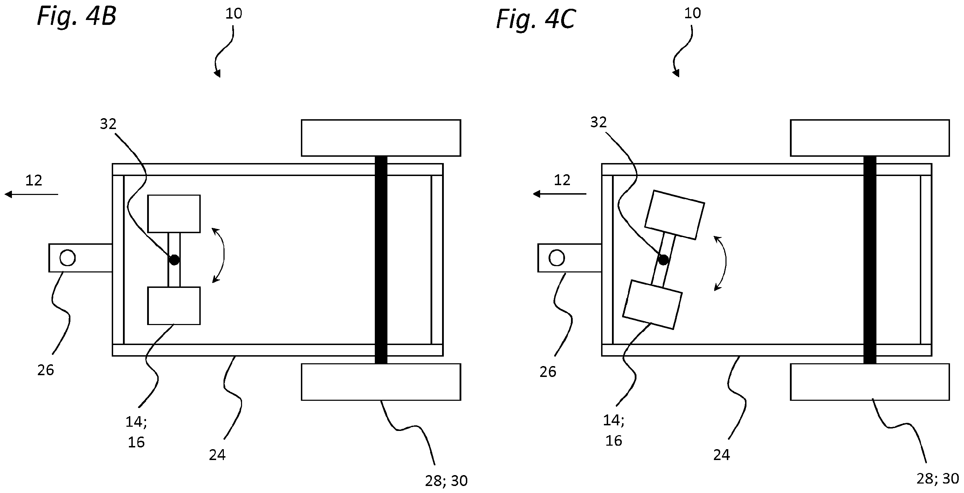

Weitere Details der erfindungsgemäßen gezogenen landwirtschaftlichen Arbeitsmaschine 10 gehen darüber hinaus aus den schematischen Ansichten der Figuren 4A bis 4C hervor, wobei die Figur 4A eine schematische Seitenansicht einer Arbeitsmaschine 10 zeigt, welche in abstützender Weise mit einer Zugmaschine 100 verbunden ist. Die Figur 4B zeigt darüber hinaus eine Arbeitsmaschine 10 mit in Fahrrichtung 12 orientierten Stützräder 14 eines Zusatzfahrwerk 16, wohingegen in der Figur 4C das Zusatzfahrwerk 16 in einer eingelenkten Stellung gezeigt ist.

Die Erfindung, respektive die Ausführungsbeispiele betreffen und zeigen eine gezogene, d.h. eine mittels einer Zugmaschine 100 (z.B. landwirtschaftlicher Traktor) gezogene (z.B. ziehbare) landwirtschaftliche Arbeitsmaschine 10 in Form einer Bodenbearbeitungs- und/oder Sämaschine, wobei diese in den Ausführungsbeispielen jeweils in einer Transportposition (z.B. für eine Straßenfahrt) dargestellt ist.

Die Arbeitsmaschine 10 weist eine Mehrzahl von Arbeitswerkzeugen 18 auf, welche zur Bodenbearbeitung und/oder zur Aussaat von Verteilgut (z.B. Saatgut, Dünger oder dergl.) eingesetzt werden und welche in einer Arbeitsposition der Arbeitsmaschine 10 eine sich in Bodenkontakt befindende Position (hier nicht dargestellt) aufweisen. Zum Mitführen und Bereitstellen des jeweiligen Verteilgut umfasst die Arbeitsmaschine 10 der Figuren 1 bis 3 darüber hinaus zumindest einen Vorratsbehälter 20.

Die Arbeitswerkzeuge 18 sind jeweils an einem Werkzeugrahmen 22 montiert, d.h. die Arbeitswerkzeuge 18 und das Zusatzfahrwerk 16 sind an unterschiedlichen Rahmen montiert, es wäre jedoch auch denkbar, diese am gleichen Rahmen zu montieren, d.h. der Werkzeugrahmen 22 könnte auch Bestandteil des Zentralrahmen 24 sein, oder es könnte zur Montage der Arbeitswerkzeuge 18 kein zusätzlicher Werkzeugrahmen 22 erforderlich sein.

Die Arbeitsmaschine 10 umfasst einen, eine Zugdeichsel 26 aufweisenden Zentralrahmen 24. Dem Zentralrahmen 24 ist im hinteren Bereich (z.B. in Transportposition hinter dem Schwerpunkt SP der Arbeitsmaschine 10) ein Fahrgestell 28 mit sich auf dem Boden abstützenden und drehenden Laufrädern 30 zugeordnet. Die Zugdeichsel 26 ist dazu eingerichtet, dass die Arbeitsmaschine 10 durch eine Abstützkraft FA in abstützender Weise mit einer Zugmaschine 100 verbindbar ist (vergl. Fig. 4A).

Gemäß den Ausführungsbeispielen ist im vorderen Bereich (z.B. in Transportposition vor dem Schwerpunkt SP der Arbeitsmaschine 10) ein Zusatzfahrwerk 16 angeordnet. Es wäre jedoch auch denkbar das dieses im Bereich der Zugdeichsel 26 angeordnet ist.

Erfindungsgemäß ist das Zusatzfahrwerk 16 federnd und/oder höhenverstellbar, was gemäß der Figuren 2 und 4A mittels Pfeile dargestellt wird, gegenüber der Zugdeichsel 26 und/oder dem Zentralrahmen 24 gelagert. Das Zusatzfahrwerk 16 ist insbesondere dazu eingerichtet eine Abstützkraft FA zu beeinflussen.

Erfindungsgemäß kann die Abstützkraft FA derartig beeinflusst werden, bspw. verringert werden, dass bspw. eine Achslast AL einer Zugmaschine 100 nicht überschritten wird. Alternativ oder ergänzend kann die Abstützkraft FA auch derartig beeinflusst werden, dass diese erhöht wird und somit bspw. eine Achslast AL der Zugmaschine 12 erhöht wird, wodurch bspw. die Traktion der Zugmaschine 100 erhöht werden kann. Alternativ oder ergänzend kann eine Beeinflussung der Abstützkraft FA auch derartig erfolgen, dass diese im Wesentlichen konstant gehalten wird. Die jeweilige Art der Beeinflussung kann bspw. in Abhängigkeit einer Fahrsituation (z.B. Straßenfahrt oder Feldfahrt) und/oder in Abhängigkeit einer Gewichtskraft FG (z.B. Gewicht der Arbeitsmaschine 10 und/oder Vorratsbehälter 20 voll / leer und/oder Anzahl der Arbeitswerkzeuge 18) der Arbeitsmaschine 10 erfolgen.

Das Zusatzfahrwerk 16 wird gemäß der Ausführungsbeispiele durch eine Achse gebildet an der zwei Stützräder 14 montiert sind, wobei an der Achse auch mehr als zwei Stützräder 14 montiert sein können. Es wäre jedoch auch denkbar, dass das Zusatzfahrwerk 16 nur durch ein Stützrad 14 gebildet wird oder durch zwei oder mehr Stützräder, die nicht auf einer gemeinsamen Achse montiert sind, gebildet wird. Die Stützräder 14 werden zudem durch Räder gebildet, es wären jedoch auch sog. Raupenfahrwerke denkbar.

Wie insbesondere aus der Figur 4C hervorgeht, ist es zudem möglich, dass das Zusatzfahrwerk 16 und/oder das eine Stützrad 14 oder die mehreren Stützräder 14 mittels zumindest einer aufrecht orientierten Schwenkachse 32 schwenkbar, insbesondere lenkbar, gegenüber der Zugdeichsel 26 und/oder dem Zentralrahmen 24 gelagert sind.

Die Abstützkraft FA wird insbesondere durch eine Stützlast der Arbeitsmaschine 10 definiert, somit umfasst ein Beeinflussen der Abstützkraft FA insbesondere ein Beeinflussen der Stützlast der Arbeitsmaschine 10. Das bedeutet, die Arbeitsmaschine weist ein, eine Gewichtskraft FG definierendes Gesamtgewicht auf, dieses Gesamtgewicht wird anteilig vom Fahrgestell 28 aufgenommen, wodurch eine Fahrgestellkraft FF resultiert und anteilig von der Zugdeichsel 26 aufgenommen, wodurch eine Abstützkraft FA resultiert. Zur Beeinflussung der Abstützkraft FA ist ein Zusatzfahrwerk 16 vorgesehen, welches dazu eingerichtet ist, anteilig eine Gewichtskraft FG aufzunehmen, wodurch entsprechend eine Zusatzfahrwerkskraft FZ resultiert. Wobei hierbei gelten kann, je größer die Zusatzfahrwerkskraft FZ je kleiner die Abstützkraft FA.

Das Zusatzfahrwerk 16 ist jeweils derartig in die Zugdeichsel 26 und/oder den Zentralrahmen 24 integriert, dass sich eine Länge und eine Breite der Arbeitsmaschine 10 nicht verändern.

Das Zusatzfahrwerk ist mittels einer Federeinrichtung 40 federnd und/oder höhenverstellbar gegenüber der Zugdeichsel 26 und/oder dem Zentralrahmen 24 gelagert, wobei die Federeinrichtung 40 gemäß der Figur 4A bspw. durch eine oder mehrere elastisch verformbare Federn 42 gebildet sein kann. Alternativ oder ergänzend kann die Federeinrichtung 40 durch einen oder mehrere Fluidzylinder 44 (z.B. pneumatisch und/oder hydraulisch betätigter Linearantrieb, Zylinder und/oder dergl.) gebildet sein. Denkbar wäre auch, dass eine Höhenverstellung mittels eines Fluidzylinder 44 erfolgt ein eine Federung mittels einer Feder 42, wobei es auch denkbar ist, sowohl eine Höhenverstellung als auch eine Federung mittels einer oder mehrerer Federn 42 oder Fluidzylinder 44 durchzuführen.

In einer alternativen oder ergänzenden Ausführungsform der Erfindung kann vorgesehen sein, dass der Fluidzylinder 44 zur Beeinflussung der Abstützkraft FA, insbesondere zur Beeinflussung der Vorspannkraft FV der Federeinrichtung 40, mit verschiedenen Volumenströmen V und/oder Fluiddrücken V beaufschlagbar ist, insbesondere mittels einer Steuereinrichtung mit verschiedenen Volumenströmen V und/oder Fluiddrücken V beaufschlagbar ist.

Die Federeinrichtung 40 kann insbesondere eine Überlastsicherung 60 für das Rad (z.B. Stützrad 14) und/oder die Räder (z.B. Stützräder 14) des Zusatzfahrwerk 16 bilden, so dass deren Tragfähigkeit nicht überschritten wird, wobei dies bspw. durch die Bauweise und Ausführungsform eines Fluidkreislauf des Fluidzylinder 44 erreicht werden kann, bspw. mittels eines Druckspeicher 62, Druckregelventilen, Druckbegrenzungsventilen und/oder dergl. Die Überlastsicherung 60 kann hierbei derartig ausgeführt sein, dass diese auf eine Vorspannkraft FV abgestimmt ist.

Es sei darauf hingewiesen, dass auch wenn in Figur 4A die Federeinrichtung 40 durch eine Feder 42 und einen Fluidzylinder 44 gebildet es ebenso denkbar ist als Federeinrichtung 40 nur eine oder mehrere Federn 42 oder Fluidzylinder 44 (z.B. mit Überlastsicherung 60) einzusetzen.

Erfindungsgemäß ist vorgesehen, dass das Zusatzfahrwerk 16 mittels einer Federeinrichtung 40 federnd und/oder höhenverstellbar gegenüber der Zugdeichsel 26 und/oder dem Zentralrahmen 24 gelagert ist, wobei die Federeinrichtung 40 dazu eingerichtet ist, zur Beeinflussung der Abstützkraft FA, eine definierte und/oder definierbare Vorspannkraft FV zu erzeugen. Was bedeutet, dass in Abhängigkeit der Vorspannkraft FV wiederum die Zusatzfahrwerksraft FZ entsprechend verändert werden kann.

Die Vorspannkraft FV kann anhand einer durch die Abstützung der Arbeitsmaschine 10 an einer Zugmaschine 100 hervorgerufenen Abstützkraft FA definiert und/oder definierbar ist, vorzugsweise derartig, dass eine erforderliche Abstützkraft FA nicht überschritten und/oder unterschritten wird. D.h. darf die auf eine Zugmaschine 100 wirkende Abstützkraft FA (z.B. hervorgerufen durch eine Stützlast) nur einen definierten maximal Wert erreichen, wird die Vorspannkraft FV derartig definiert, dass dieser maximale Wert nicht überschritten wird, d.h. das insbesondere die Zusatzfahrwerkskraft FZ entsprechend angepasst wird.

Gemäß der Figuren 1 bis 3 ist vorgesehen, dass die Arbeitsmaschine 10 eine Mehrzahl von Arbeitswerkzeugen 18 und/oder zumindest einen Vorratsbehälter 20 aufweist, welche in einer Transportposition oberhalb und/oder seitlich des Zusatzfahrwerk 16 angeordnet sind, wobei die Vorspannkraft FV Anhand einer Anzahl an Arbeitswerkzeugen 18 und/oder Anhand einer Beladung (z.B. Gewicht) des zumindest einen Vorratsbehälters 20 definiert und/oder definierbar ist, d.h. das bspw. je mehr Arbeitswerkzeuge 18 vorhanden sind, je größer wird die Vorspannkraft FV.

Zur Ermittlung der Abstützkraft FA kann eine Erfassungseinrichtung 50 vorgesehen sein. Wobei die Erfassungseinrichtung 50 dazu eingerichtet ist, eine Abstützkraft FA mittelbar oder unmittelbar zu ermitteln. Ein unmittelbares Ermitteln kann hierbei eine Erfassungseinrichtung 50 vorsehen welche direkt an der Zugdeichsel angebracht ist und somit direkt an der Zugdeichsel die Abstützkraft FA ermittelt. Ein mittelbares Ermitteln kann hierbei eine Erfassung eines Gesamtgewichts der Arbeitsmaschine 10 und/oder eines Gewichts des zumindest einen Vorratsbehälters 20 sowie eine nachfolgende Berechnung der Abstützkraft FA umfassen.

Wie insbesondere aus der Figur 4A hervorgeht beträgt ein Abstandsverhältnis zwischen Zugdeichsel 26 zu Zusatzfahrwerk 16 und Zusatzfahrwerk 16 zu Fahrgestell 28 mindestens 1:4 es wären jedoch auch noch andere Abstandsverhältnisse denkbar, bspw. mindestens 1:2 oder mindestens 1:3 oder mindestens 1:5 Wobei zur Beeinflussung dieses Verhältnis das Zusatzfahrwerk 16 an verschiedenen Positionen der Zugdeichsel 26 und/oder des Zentralrahmen 24 montiert werden kann.

Auch wenn in den Ausführungsbeispielen jeweils nur ein Zusatzfahrwerk 16 dargestellt ist, wäre es zudem denkbar zwei oder mehr Zusatzfahrwerke 16 an einer Arbeitsmaschine 10 einzusetzen.

Das Zusatzfahrwerk 16 bildet ein sich mit den Laufrädern 30 gemeinsam, insbesondere gleichzeitig auf dem Boden abstützendes Zusatzfahrwerk 16

10Dadurch kann insbesondere ermöglicht werden, dass das Zusatzfahrwerk 16 und die Laufräder 30 vorzugsweise gleichzeitig zur Lastabtragung der Arbeitsmaschine 10 beitragen, zweckmäßig in Feld- und/oder Straßenfahrt der Arbeitsmaschine 10.

Das Zusatzfahrwerk 16 ragt vorzugsweise nicht über das Fahrgestell 28, insbesondere dessen Laufräder 30 nach seitlich außen hinaus. Das Zusatzfahrwerk 16 und das Fahrgestell 28 weisen z. B. eine Längserstreckung von maximal 3 Metern auf, insbesondere eine Gesamtbreite bei Bodenkontakt von maximal 3 Metern.

Das Zusatzfahrwerk 16 kann von einer oder mehreren Schwingenarmkonstruktionen betätigt werden, wobei bei einem bevorzugten Ausführungsbeispiel nur eine einzige Schwingenarmkonstruktion zur Betätigung des Zusatzfahrwerks 16 vorgesehen sein kann.

Bei einem ebenfalls bevorzugten Ausführungsbeispiel kann das Zusatzfahrwerk 16 zwei Stützräder 14 oder zwei Raupenfahrwerke umfassen, welche mittels einer gemeinsamen Achskonstruktion verbunden sein können, wobei die Achskonstruktion derartig federnd und/oder höhenverstellbar gegenüber der Zugdeichsel 26 und/oder dem Zentralrahmen 24 gelagert sein kann, dass die Stützräder 14 oder die Raupenfahrwerke zumindest weitgehend synchrone, insbesondere identische Bewegungen ausführen und/oder definiert asynchrone, z. B. unterschiedliche Bewegungen ausführen.

Obwohl die Erfindung unter Bezugnahme auf bestimmte Ausführungsbeispiele beschrieben worden ist, soll die Erfindung nicht auf die offenbarten Ausführungsbeispiele begrenzt sein, sondern soll alle Ausführungsbeispiele umfassen, die in den Bereich der beigefügten Patentansprüche fallen. Insbesondere beansprucht die Erfindung auch Schutz für den Gegenstand und die Merkmale der Unteransprüche unabhängig von den in Bezug genommenen Ansprüchen.

### Bezugszeichenliste:

| | | | |
|---|---|---|---|
| 10 | Landwirtschaftliche Arbeitsmaschine | 60 | Überlastsicherung |
| 12 | Fahrtrichtung | 62 | Druckspeicher |
| 14 | Stützrad | | |
| 16 | Zusatzfahrwerk | 100 | Zugmaschine |
| 18 | Arbeitswerkzeug | | |
| 20 | Vorratsbehälter | V | Volumenstrom; Fluiddruck |
| 22 | Werkzeugrahmen | | |
| 24 | Zentralrahmen | AL | Achslast Zugmaschine |
| 26 | Zugdeichsel | | |
| 28 | Fahrgestell | FG | Gewichtskraft |
| 30 | Laufrad | FA | Abstützkraft |
| 32 | Schwenkachse | FZ | Zusatzfahrwerkskraft |
| | | FV | Vorspannkraft |
| 40 | Federeinrichtung | FF | Fahrgestellkraft |
| 42 | Feder | | |
| 44 | Fluidzylinder | SP | Schwerpunkt |
| 50 | Erfassungseinrichtung | | |

## Patentansprüche

1. Gezogene landwirtschaftliche Arbeitsmaschine (10), vorzugsweise Bodenbearbeitungs- und/oder Sämaschine,
mit einem eine Zugdeichsel (26) aufweisenden Zentralrahmen (24), welchem Zentralrahmen (24) vorzugsweise im hinteren Bereich ein Fahrgestell (28) mit sich auf dem Boden abstützenden und drehenden Laufräder (30) zugeordnet ist und welche Zugdeichsel (26) dazu eingerichtet ist, dass die Arbeitsmaschine (10) durch eine Abstützkraft (FA) in abstützender Weise mit einer Zugmaschine (100) verbindbar ist, wobei im Bereich der Zugdeichsel (26) oder vorzugsweise im vorderen Bereich des Zentralrahmen (24) ein Zusatzfahrwerk (16) angeordnet ist, wobei das Zusatzfahrwerk (16) federnd und/oder höhenverstellbar gegenüber der Zugdeichsel (26) und/oder dem Zentralrahmen (24) gelagert ist und dazu eingerichtet ist, eine Abstützkraft (FA) zu beeinflussen, **dadurch gekennzeichnet, dass**
- das Zusatzfahrwerk (16) ein sich zur Lastabtragung der Arbeitsmaschine (10) mit den Laufrädern (30) gemeinsam auf dem Boden abstützendes Zusatzfahrwerk (16) ist, und
- das Zusatzfahrwerk (16) eine gleiche oder eine kleinere Längserstreckung aufweist als das Fahrgestell (28) und vorzugsweise die Längserstreckung des Zusatzfahrwerks (16) und die Längserstreckung des Fahrgestells (3) maximal 3 Meter beträgt.

2. Arbeitsmaschine (10), nach Anspruch 1, **dadurch gekennzeichnet, dass** ein Beeinflussen der Abstützkraft (FA) ein Erhöhen, ein Verringern und/oder ein im Wesentlichen Konstant halten der Abstützkraft (FA) umfasst, wobei die Art der Beeinflussung vorzugsweise anhand der Fahrsituation und/oder der Gewichtskraft (FG) der Arbeitsmaschine (10) erfolgen kann.

3. Arbeitsmaschine (10), nach Anspruch 1 oder 2, **dadurch gekennzeichnet, dass** das Zusatzfahrwerk (16) mittels einer Federeinrichtung (40) federnd und/oder höhenverstellbar gegenüber der Zugdeichsel (26) und/oder dem Zentralrahmen (24) gelagert ist, wobei die Federeinrichtung (40) dazu eingerichtet ist, zur Beeinflussung der Abstützkraft (FA) eine definierte und/oder definierbare Vorspannkraft (FV) zu erzeugen.

4. Arbeitsmaschine (10), nach Anspruch 3, **dadurch gekennzeichnet, dass** die Größe der Vorspannkraft (FV) der Federeinrichtung (40) anhand einer durch die Abstützung der Arbeitsmaschine (10) an einer Zugmaschine (100) hervorgerufenen Abstützkraft (FA) definiert und/oder definierbar ist, vorzugsweise derartig, dass eine erforderliche Abstützkraft (FA) nicht überschritten und/oder unterschritten wird.

5. Arbeitsmaschine (10), nach zumindest einem der Ansprüche 3 oder 4, **dadurch gekennzeichnet, dass** diese eine Mehrzahl von Arbeitswerkzeugen (18) und/oder zumindest einen Vorratsbehälter aufweist, welche in einer Transportposition oberhalb und/oder seitlich des Zusatzfahrwerk (16) angeordnet sind, wobei die Vorspannkraft (FV) der Federeinrichtung (40) anhand einer Anzahl an Arbeitswerkzeugen (18) und/oder anhand einer Beladung des zumindest einen Vorratsbehälters definiert und/oder definierbar ist.

6. Arbeitsmaschine (10), nach zumindest einem der Ansprüche 3 bis 5, **dadurch gekennzeichnet, dass** eine Vorspannkraft (FV) der Federeinrichtung (40) anhand einer mittels einer Erfassungseinrichtung (50) ermittelten Abstützkraft (FA) definiert und/oder definierbar ist, wobei die Erfassungseinrichtung (50) insbesondere dazu eingerichtet ist, eine Abstützkraft (FA) mittelbar oder unmittelbar zu ermitteln.

7. Arbeitsmaschine (10), nach einem der vorhergehenden Ansprüche, **dadurch gekennzeichnet, dass** das Zusatzfahrwerk (16) mittels einer Federeinrichtung (40) federnd und/oder höhenverstellbar gegenüber der Zugdeichsel (26) und/oder dem Zentralrahmen (24) gelagert ist, wobei die Federeinrichtung (40) durch eine oder mehrere elastisch verformbare Federn (42) gebildet wird.

8. Arbeitsmaschine (10), nach einem der vorhergehenden Ansprüche, **dadurch gekennzeichnet, dass** das Zusatzfahrwerk (16) mittels einer Federeinrichtung (40) federnd und/oder höheverstellbar gegenüber der Zugdeichsel (26) und/oder dem Zentralrahmen (24) gelagert ist, wobei die Federeinrichtung (40) durch einen oder mehrere Fluidzylinder (44) gebildet wird.

9. Arbeitsmaschine (10), nach Anspruch 8, **dadurch gekennzeichnet, dass** der Fluidzylinder (44) zur Beeinflussung der Abstützkraft (FA), insbesondere zur Beeinflussung der Vorspannkraft (FV) der Federeinrichtung (40), mit verschiedenen Volumenströmen und/oder Fluiddrücken beaufschlagbar ist, insbesondere mittels einer Steuereinrichtung mit verschiedenen Volumenströmen und/oder Fluiddrücken beaufschlagbar ist.

10. Arbeitsmaschine (10), nach einem der vorhergehenden Ansprüche, **dadurch gekennzeichnet, dass** das Zusatzfahrwerk (16) durch ein Stützrad (14) oder durch mehrere Stützräder (14) gebildet wird.

11. Arbeitsmaschine (10), nach Anspruch 10, **dadurch gekennzeichnet, dass** das Zusatzfahrwerk (16) und/oder das eine Stützrad (14) oder die mehreren Stützräder (14) mittels zumindest einer aufrecht orientierten Achse schwenkbar, insbesondere lenkbar, gegenüber der Zugdeichsel (26) und/oder dem Zentralrahmen (24) gelagert sind.

12. Arbeitsmaschine (10), nach einem der vorhergehenden Ansprüche, **dadurch gekennzeichnet, dass** die Laufräder (30) und/oder das eine Stützrad (14) oder die mehreren Stützräder (14) durch Räder und/oder durch Raupenfahrwerke gebildet sind.

13. Arbeitsmaschine (10), nach einem der vorhergehenden Ansprüche, **dadurch gekennzeichnet, dass** das Zusatzfahrwerk mittels einer Federeinrichtung (40) federnd und/oder höhenverstellbar gegenüber der Zugdeichsel (26) und/oder dem Zentralrahmen (24) gelagert ist und das Zusatzfahrwerk (16), vorzugsweise das eine Stützrad (14) oder die mehreren Stützräder (14) welche das Zusatzfahrwerk (16) bilden, mittels der Federeinrichtung (40) in eine sich nicht mit einer Bodenfläche in Kontakt befindende Position verschwenkbar ist, insbesondere derartig, dass keine Beeinflussung der Abstützkraft (FA) mittels des Zusatzfahrwerk (16) erfolgt.

14. Arbeitsmaschine (10), nach einem der vorhergehenden Ansprüche, **dadurch gekennzeichnet, dass** die Höhenlage des Zugfahrzeug und/oder der Zugdeichsel (26) veränderbar ist, wobei eine Vorspannkraft (FV) der Federeinrichtung (40) an die jeweilige Höhenlage anpassbar ist.

15. Arbeitsmaschine (10), nach einem der vorhergehenden Ansprüche, **dadurch gekennzeichnet, dass** sich die Laufräder (30) in Straßenfahrt und vorzugsweise Feldfahrt zur Lastabtragung der Arbeitsmaschine (10) auf dem Boden abstützen.

16. Arbeitsmaschine (10), nach einem der vorhergehenden Ansprüche, **dadurch gekennzeichnet, dass** das Zusatzfahrwerk (16) in die Zugdeichsel (26) und/oder den Zentralrahmen (24) derartig integriert ist, dass sich eine Breite der Arbeitsmaschine (10) nicht erhöht.

17. Arbeitsmaschine (10), nach einem der vorhergehenden Ansprüche, **dadurch gekennzeichnet, dass** das Zusatzfahrwerk (16) nicht über das Fahrgestell (28) und/oder die Laufräder (30) nach seitlich außen hinausragt.

18. Arbeitsmaschine (10), nach einem der vorhergehenden Ansprüche, **dadurch gekennzeichnet, dass** ein Abstandsverhältnis Zugdeichsel (26) zu Zusatzfahrwerk (16) und Zusatzfahrwerk (16) zu Fahrgestell (28) mindestens 1:2 oder mindestens 1:3 oder mindestens 1:4 oder mindestens 1:5 beträgt.

19. Arbeitsmaschine (10), nach einem der vorhergehenden Ansprüche, **dadurch gekennzeichnet, dass** das Zusatzfahrwerk (16) zwei Stützräder (14) oder zwei Raupenfahrwerke aufweist, welche mittels einer gemeinsamen Achskonstruktion verbunden sind, wobei die Achskonstruktion derartig federnd und/oder höhenverstellbar gegenüber der Zugdeichsel (26) und/oder dem Zentralrahmen (24) gelagert ist, dass die Stützräder (14) oder die Raupenfahrwerke zumindest weitgehend synchrone Bewegungen ausführen und/oder definiert asynchrone Bewegungen ausführen.

20. Arbeitsmaschine (10), nach einem der vorhergehenden Ansprüche, **dadurch gekennzeichnet, dass** das Zusatzfahrwerk (16) derartig dimensioniert und ausgeführt ist, um wenigstens 1 Tonne, 2 Tonnen oder 3 Tonnen zu tragen.

21. Arbeitsmaschine (10), nach einem der vorhergehenden Ansprüche, **dadurch gekennzeichnet, dass** das Zusatzfahrwerk (16) nur ein einziges Stützrad (14) oder nur ein einziges Raupenfahrwerk aufweist.

22. Arbeitsmaschine (10), nach einem der vorhergehenden Ansprüche, **dadurch gekennzeichnet, dass** das Zusatzfahrwerk (16) von nur einer einzigen Schwingenarmkonstruktion betätigt wird.

23. Verfahren zum Beeinflussen einer Abstützkraft (FA) einer gezogenen landwirtschaftlichen Arbeitsmaschine (10), **gekennzeichnet durch** die Schritte,
- Bereitstellen einer gezogenen landwirtschaftlichen Arbeitsmaschine (10) nach einem der Ansprüche 1 bis 22,
- Federndes und/oder höhenverstellbares Lagern eines Zusatzfahrwerk (16) mittels einer Federeinrichtung (40) mit einer definierten und/oder definierbaren Vorspannkraft (FV),
- Einstellen einer Vorspannkraft (FV) derartig, dass eine Abstützkraft (FA) erhöht, verringert und/oder weitgehend konstant gehalten wird.

## Claims

1. A towed agricultural working machine (10), preferably a soil-cultivation and/or sowing machine,
with a central frame (24) having a drawbar (26), which central frame (24) is assigned, preferably in the rear region, a chassis (28) with rotating running wheels (30) which are supported on the ground, and which drawbar (26) is configured such that the working machine (10) is connectable in a supporting manner to a towing machine (100) by way of a supporting force (FA), wherein an auxiliary running gear (16) is arranged in the region of the drawbar (26) or, preferably, in the front region of the central frame (24), wherein the auxiliary running gear (16) is mounted resiliently and/or so as to be height-adjustable in relation to the drawbar (26) and/or the central frame (24) and is configured to influence a supporting force (FA), **characterized in that**
- the auxiliary running gear (16) is an auxiliary running gear (16) which is supported on the ground together with the running wheels (30) for load transfer of the working machine (10), and
- the auxiliary running gear (16) has a longitudinal extent which is equal to or smaller than that of the chassis (28), and preferably the longitudinal extent of the auxiliary running gear (16) and the longitudinal extent of the chassis (3) are at most 3 metres.

2. The working machine (10) according to Claim 1, **characterized in that** influencing of the supporting force (FA) encompasses increasing or reducing the supporting force (FA) and/or keeping the latter substantially constant, wherein the type of influencing can be realized preferably according to the driving situation and/or the weight force (FG) of the working machine (10).

3. The working machine (10) according to Claim 1 or 2, **characterized in that** the auxiliary running gear (16) is mounted resiliently and/or so as to be height-adjustable in relation to the drawbar (26) and/or the central frame (24) by means of a spring device (40), wherein the spring device (40) is configured to generate a defined and/or definable preload force (FV) for influencing the supporting force (FA).

4. The working machine (10) according to Claim 3, **characterized in that** the magnitude of the preload force (FV) of the spring device (40) is defined and/or definable according to a supporting force (FA) generated by the supporting of the working machine (10) on a towing machine (100), preferably in such a way that a required supporting force (FA) is not exceeded and/or fallen below.

5. The working machine (10) according to at least either of Claims 3 and 4, **characterized in that** said working machine has a plurality of working tools (18) and/or at least one storage container which are arranged above and/or laterally with respect to the auxiliary running gear (16) in a transport direction, wherein the preload force (FV) of the spring device (40) is defined and/or definable according to a number of working tools (18) and/or according to a loading of the at least one storage container.

6. The working machine (10) according to at least one of Claims 3 to 5, **characterized in that** a preload force (FV) of the spring device (40) is defined and/or definable according to a supporting force (FA) ascertained by means of a detection device (50), wherein the detection device (50) is configured in particular to ascertain a supporting force (FA) indirectly or directly.

7. The working machine (10) according to one of the preceding claims, **characterized in that** the auxiliary running gear (16) is mounted resiliently and/or so as to be height-adjustable in relation to the drawbar (26) and/or the central frame (24) by means of a spring device (40), wherein the spring device (40) is formed by one or more elastically deformable springs (42).

8. The working machine (10) according to one of the preceding claims, **characterized in that** the auxiliary running gear (16) is mounted resiliently and/or so as to be height-adjustable in relation to the drawbar (26) and/or the central frame (24) by means of a spring device (40), wherein the spring device (40) is formed by one or more fluid cylinders (44).

9. The working machine (10) according to Claim 8, **characterized in that**, for influencing the supporting force (FA), in particular for influencing the preload force (FV) of the spring device (40), the fluid cylinder (44) is able to be acted on by different volume flows and/or fluid pressures, in particular is able to be acted on by different volume flows and/or fluid pressures by means of a control device.

10. The working machine (10) according to one of the preceding claims, **characterized in that** the auxiliary running gear (16) is formed by one supporting wheel (14) or by multiple supporting wheels (14).

11. The working machine (10) according to Claim 10, **characterized in that** the auxiliary running gear (16) and/or the one supporting wheel (14) or the multiple supporting wheels (14) are mounted so as to be pivotable, in particular steerable, in relation to the drawbar (26) and/or the central frame (24) by means of at least one pin that is oriented upright.

12. The working machine (10) according to one of the preceding claims, **characterized in that** the running wheels (30) and/or the one supporting wheel (14) or the multiple supporting wheels (14) are formed by wheels and/or by crawler-type running gears.

13. The working machine (10) according to one of the preceding claims, **characterized in that** the auxiliary running gear is mounted resiliently and/or so as to be height-adjustable in relation to the drawbar (26) and/or the central frame (24) by means of a spring device (40), and the auxiliary running gear (16), preferably the one supporting wheel (14) or the multiple supporting wheels (14) that form the auxiliary running gear (16), is pivotable by means of the spring device (40) into a position of no contact with a ground surface, in particular in such a way that the supporting force (FA) is not influenced by means of the auxiliary running gear (16) .

14. The working machine (10) according to one of the preceding claims, **characterized in that** the height position of the towing vehicle and/or the drawbar (26) is variable, wherein a preload force (FV) of the spring device (40) is adaptable to the respective height position.

15. The working machine (10) according to one of the preceding claims, **characterized in that**, during on-road travel and preferably during in-field travel, the running wheels (30) are supported on the ground for load transfer of the working machine (10).

16. The working machine (10) according to one of the preceding claims, **characterized in that** the auxiliary running gear (16) is integrated into the drawbar (26) and/or the central frame (24) in such a way that a width of the working machine (10) is not increased.

17. The working machine (10) according to one of the preceding claims, **characterized in that** the auxiliary running gear (16) does not laterally outwardly project beyond the chassis (28) and/or the running wheels (30).

18. The working machine (10) according to one of the preceding claims, **characterized in that** a ratio of the spacing of drawbar (26) to auxiliary running gear (16) and auxiliary running gear (16) to chassis (28) is at least 1:2 or at least 1:3 or at least 1:4 or at least 1:5.

19. The working machine (10) according to one of the preceding claims, **characterized in that** the auxiliary running gear (16) has two supporting wheels (14) or two crawler-type running gears that are connected by means of a common axle construction, wherein the axle construction is mounted resiliently and/or so as to be height-adjustable in relation to the drawbar (26) and/or the central frame (24) in such a way that the supporting wheels (14) or the crawler-type running gears perform at least largely synchronous movements and/or definedly asynchronous movements.

20. The working machine (10) according to one of the preceding claims, **characterized in that** the auxiliary running gear (16) is dimensioned and designed so as to bear at least 1 tonne, 2 tonnes or 3 tonnes.

21. The working machine (10) according to one of the preceding claims, **characterized in that** the auxiliary running gear (16) has only a single supporting wheel (14) or only a single crawler-type running gear.

22. The working machine (10) according to one of the preceding claims, **characterized in that** the auxiliary running gear (16) is actuated by only a single swing-arm construction.

23. A method for influencing a supporting force (FA) of a towed agricultural working machine (10), **characterized by** the steps of
- providing a towed agricultural working machine (10) according to one of Claims 1 to 22,
- mounting an auxiliary running gear (16) in a resilient and/or height-adjustable manner by means of a spring device (40) with a defined and/or definable preload force (FV),
- setting a preload force (FV) in such a way that a supporting force (FA) is increased, reduced and/or kept largely constant.

## Revendications

1. Machine de travail agricole tractée (10), de préférence machine pour le travail du sol et/ou semoir,
comprenant un cadre central (24) présentant un timon (26), dans laquelle, de préférence dans la partie arrière, un châssis (28) pourvu de roues de roulement (30) tournantes et prenant appui sur le sol est associé audit cadre central (24), et dans laquelle ledit timon (26) est conçu pour que la machine de travail (10) puisse être reliée en s'appuyant par l'intermédiaire d'une force d'appui (FA) à un véhicule tracteur (100), dans laquelle un châssis auxiliaire (16) est disposé dans la zone du timon (26) ou de préférence dans la zone avant du cadre central (24), dans laquelle le châssis auxiliaire (16) est monté sur ressort et/ou de manière réglable en hauteur par rapport au timon (26) et/ou au cadre central (24), et est conçu pour influencer une force d'appui (FA),
**caractérisée en ce que**
- le châssis auxiliaire (16) est un châssis auxiliaire (16) prenant appui sur le sol conjointement avec les roues de roulement (30) pour la transmission de charge de la machine de travail (10), et
- le châssis auxiliaire (16) présente une dimension longitudinale égale ou inférieure à celle du châssis (28), et de préférence la dimension longitudinale du châssis auxiliaire (16) et la dimension longitudinale du châssis (3) mesurent au maximum 3 mètres.

2. Machine de travail (10) selon la revendication 1, **caractérisée en ce que** le fait d'influencer la force d'appui (FA) comprend le fait d'augmenter, de diminuer et/ou de maintenir substantiellement constante la force d'appui (FA), dans laquelle le type d'influence peut être effectué de préférence selon la situation de conduite et/ou de poids (FG) de la machine de travail (10) .

3. Machine de travail (10) selon la revendication 1 ou 2, **caractérisée en ce que** le châssis auxiliaire (16) est monté sur ressort au moyen d'un dispositif faisant ressort (40) et/ou de manière réglable en hauteur par rapport au timon (26) et/ou au cadre central (24), dans laquelle le dispositif faisant ressort (40) est conçu pour générer une force de précontrainte (FV) définie et/ou définissable pour influencer la force d'appui (FA) .

4. Machine de travail (10) selon la revendication 3, **caractérisée en ce que** la grandeur de la force de précontrainte (FV) du dispositif faisant ressort (40) est définie et/ou définissable à l'aide d'une force d'appui (FA) provoquée par l'appui de la machine de travail (10) sur un véhicule tracteur (100), de préférence de façon à ne pas dépasser et/ou soupasser une force d'appui (FA) nécessaire.

5. Machine de travail (10) selon au moins l'une des revendications 3 ou 4, **caractérisée en ce qu'**elle présente une pluralité d'outils de travail (18) et/ou au moins un réservoir qui sont disposés dans une position de transport au-dessus et/ou à côté du châssis auxiliaire (16), dans laquelle la force de précontrainte (FV) du dispositif faisant ressort (40) est définie et/ou définissable à l'aide d'un nombre d'outils de travail (18) et/ou à l'aide d'un chargement dudit au moins un réservoir.

6. Machine de travail (10) selon au moins l'une des revendications 3 à 5, **caractérisée en ce qu'**une force de précontrainte (FV) du dispositif faisant ressort (40) est définie et/ou définissable à l'aide d'une force d'appui (FA) établie au moyen d'un dispositif de détection (50), dans laquelle le dispositif de détection (50) est conçu en particulier pour établir une force d'appui (FA) indirectement ou directement.

7. Machine de travail (10) selon l'une quelconque des revendications précédentes, **caractérisée en ce que** le châssis auxiliaire (16) est monté sur ressort au moyen d'un dispositif faisant ressort (40) et/ou de manière réglable en hauteur par rapport au timon (26) et/ou au cadre central (24), dans laquelle le dispositif faisant ressort (40) est formé par un ou plusieurs ressorts (42) à déformation élastique.

8. Machine de travail (10) selon l'une quelconque des revendications précédentes, **caractérisée en ce que** le châssis auxiliaire (16) est monté sur ressort au moyen d'un dispositif faisant ressort (40) et/ou de manière réglable en hauteur par rapport au timon (26) et/ou au cadre central (24), dans laquelle le dispositif faisant ressort (40) est formé par un ou plusieurs vérins (44).

9. Machine de travail (10) selon la revendication 8, **caractérisée en ce que** dans le but d'influencer la force d'appui (FA), en particulier d'influencer la force de précontrainte (FV) du dispositif faisant ressort (40), le vérin (44) peut être sollicité par différents débits volumiques et/ou différentes pressions de fluide, en particulier par différents débits volumiques et/ou différentes pressions de fluide au moyen d'un dispositif de commande.

10. Machine de travail (10) selon l'une quelconque des revendications précédentes, **caractérisée en ce que** le châssis auxiliaire (16) est formé par une roue d'appui (14) ou par plusieurs roues d'appui (14).

11. Machine de travail (10) selon la revendication 10, **caractérisée en ce que** le châssis auxiliaire (16) et/ou ladite une roue d'appui (14) ou les plusieurs roues d'appui (14) sont montés pivotants, en particulier orientables, au moyen d'au moins un essieu orienté verticalement, par rapport au timon (26) et/ou au cadre central (24).

12. Machine de travail (10) selon l'une quelconque des revendications précédentes, **caractérisée en ce que** les roues de roulement (30) et/ou ladite une roue d'appui (14) ou les plusieurs roues d'appui (14) sont formées par des roues et/ou des trains de roulement à chenilles.

13. Machine de travail (10) selon l'une quelconque des revendications précédentes, **caractérisée en ce que** le châssis auxiliaire est monté sur ressort au moyen d'un dispositif faisant ressort (40) et/ou de manière réglable en hauteur par rapport au timon (26) et/ou au cadre central (24), et le châssis auxiliaire (16), de préférence ladite une roue d'appui (14) ou les plusieurs roues d'appui (14) qui forment le châssis auxiliaire (16), peut pivoter au moyen du dispositif faisant ressort (40) dans une position sans contact avec une surface du sol, en particulier de telle sorte qu'aucune influence sur la force d'appui (FA) n'est exercée au moyen du châssis auxiliaire (16).

14. Machine de travail (10) selon l'une quelconque des revendications précédentes, **caractérisée en ce que** la position en hauteur du véhicule tracteur et/ou du timon (26) est variable, dans laquelle une force de précontrainte (FV) du dispositif faisant ressort (40) peut être adaptée à la position en hauteur respective.

15. Machine de travail (10) selon l'une quelconque des revendications précédentes, **caractérisée en ce que** lors de la conduite sur route, et de préférence lors de la conduite dans le champ, les roues de roulement (30) prennent appui sur le sol pour la transmission de charge de la machine de travail (10).

16. Machine de travail (10) selon l'une quelconque des revendications précédentes, **caractérisée en ce que** le châssis auxiliaire (16) est intégré dans le timon (26) et/ou le cadre central (24) de telle sorte qu'une largeur de la machine de travail (10) n'augmente pas.

17. Machine de travail (10) selon l'une quelconque des revendications précédentes, **caractérisée en ce que** le châssis auxiliaire (16) ne dépasse pas latéralement à l'extérieur du châssis (28) et/ou des roues de roulement (30).

18. Machine de travail (10) selon l'une quelconque des revendications précédentes, **caractérisée en ce qu'**un rapport de distance entre le timon (26) et le châssis auxiliaire (16) et entre le châssis auxiliaire (16) et le châssis (28) est au moins de 1:2 ou au moins de 1:3 ou au moins de 1:4 ou au moins de 1:5.

19. Machine de travail (10) selon l'une quelconque des revendications précédentes, **caractérisée en ce que** le châssis auxiliaire (16) présente deux roues d'appui (14) ou deux trains de roulement à chenilles qui sont reliés au moyen d'une construction d'essieu commune, dans laquelle la construction d'essieu est montée sur ressort et/ou de manière réglable en hauteur par rapport au timon (26) et/ou au cadre central (24) de telle sorte que les roues d'appui (14) ou les trains de roulement à chenilles effectuent des mouvements au moins substantiellement synchrones et/ou des mouvements asynchrones de manière définie.

20. Machine de travail (10) selon l'une quelconque des revendications précédentes, **caractérisée en ce que** le châssis auxiliaire (16) est dimensionné et réalisé de telle sorte qu'il porte au moins 1 tonne, 2 tonnes ou 3 tonnes.

21. Machine de travail (10) selon l'une quelconque des revendications précédentes, **caractérisée en ce que** le châssis auxiliaire (16) ne présente qu'une seule roue d'appui (14) ou qu'un seul train de roulement à chenilles.

22. Machine de travail (10) selon l'une quelconque des revendications précédentes, **caractérisée en ce que** le châssis auxiliaire (16) n'est actionné que par une seule construction de bras oscillant.

23. Procédé permettant d'influencer une force d'appui (FA) d'une machine de travail agricole tractée (10), **caractérisé par** les étapes consistant à
- fournir une machine de travail agricole tractée (10) selon l'une quelconque des revendications 1 à 22,
- monter sur ressort et/ou de manière réglable en hauteur un châssis auxiliaire (16) au moyen d'un dispositif faisant ressort (40) avec une force de précontrainte (FV) définie et/ou définissable,
- régler une force de précontrainte (FV) de façon à augmenter, à diminuer et/ou à maintenir substantiellement constante une force d'appui (FA).
